# EUROPEAN PATENT APPLICATION

(11) **EP 1 610 505 A1**
(43) Date of publication of application: **28.12.2005**
(21) Application number: 04725792.8
(22) Date of filing: 05.04.2004
(51) Int. Cl.: H04L 12/56

(54) **ROUTER DEVICE AND COMMUNICATION METHOD**

(30) Priority: 03.04.2003 JP 2003100018; 31.03.2004 JP 2004103810
(71) Applicant: MATSUSHITA ELECTRIC INDUSTRIAL CO., LTD., Kadoma-shi, Osaka 571-8501 (JP)
(72) Inventor: FUNABIKI, Makoto, Yokohama-shi, Kanagawa 230-0001 (JP); MATSUMOTO, Taisuke, Yokohama-shi, Kanagawa 220-0004 (JP); IKEDA, Shinkichi, Yokohama-shi, Kanagawa 224-0006 (JP); KOBAYASHI, Hirokazu, Tokyo 206-0824 (JP); KUMAZAWA, Masayuki, Yokohama-shi, Kanagawa 224-0021 (JP); KAWAHARA, Toyoki, Tokyo 182-0007 (JP)
(74) Representative: Pautex Schneider, Nicole Véronique
(86) International application number: PCT/JP2004/004889
(87) International publication number: WO 2004/091153

(57) **Abstract**

A router device includes a lower-layer information acquisition section (38) for acquiring connection information of whether or not connected with a base station in an external network from a lower layer (34), and a route judgment section (40) for transferring the received packet to the base station in the case of being connected with the base station and judging a transfer destination by looking up a routing table in the case of not being connected with the base station, when receiving a packet destined for a terminal in an external network from a radio terminal device in a same local network. Because the received packet is transferred to the base station during connection with the base station, the packet can be transferred to the external via the router intended by the terminal. Furthermore, the load in the local network can be reduced.

## Description

### TECHNICAL FIELD

The present invention relates to a router device and communication method in a local network constituted by a plurality of radio terminal devices and a plurality of router devices for communication with the external terminal device existing on the Internet.

### BACKGROUND ART

Conventionally, in a communication system using IP (Internet protocol) , when a certain local network is connected to an external network, such as the Internet, through a plurality of router devices (hereinafter, referred to as external-connection router devices), in the case that a radio terminal device within the local network communicates with an external terminal device of the external network via a predetermined external-connection router device, there is a possibility that a packet is transferred to different external-connection router device in the local network and then transferred from the transferred external-connection router device to the external terminal device.

For example, by carrying a cellular telephone having a cellular interface, such as for third-generation mobile communication, for connection to an external network and a radio interface for use in communication at within a local network, a first personal digital assistant having a wireless LAN interface for connection to an external network and an interface for use in communication at within a local network, and a second personal digital assistant having only an interface for use in communication at within a local network without having an interface for connection to an external network, the user may desire to have communication on the second personal digital assistant free of an external-connection interface with an external terminal device through use of the cellular interface of the cellular telephone. Namely, the cellular telephone and the first personal digital assistant are utilized as an external-connection router device. For example, assuming the cellular is higher in security than the wireless LAN, it can be considered to have connection with the external via the cellular telephone where emphasize is placed on security. In this case, the second personal digital assistant free of an external-connection interface transmits same to a packet cellular telephone desired to be used for transmission to the external network by use of the interface for use in communication at within a local network. The cellular telephone transfers the received packet to the external by use of the cellular interface.

However, the cellular telephone does not always transfer a received packet to the external network. For example, there can be considered a case that dynamic routing protocol (including RIP (routing information protocol) or OSPF (open shortest path fast), for example) is used in route search on the external-connection router device in the local network. This is because the plurality of external-connection router devices are not always connected with the external network, in which case there is a need to secure a route for transferring the packet to the external via another external-connection router device. In this case, routing information is exchanged at a constant time interval between the external-connection router devices, wherein routing tables are configured respectively in the external-connection router devices. The routing table describes therein destination IP addresses, the corresponding next hop router IP addresses, and so on. The external-connection router device, when received a packet not destined for itself, looks up the routing table held therein and checks whether included is an entry for a received-packer destination IP address. When there is an entry for the received-packer destination IP address in the routing table, the received packet is transferred to the corresponding IP address of next hop router.

For example, for IPv6 (neighbor discovery for IP version 6: RFC 2461), when the external-connection router device receives a packet, it refers to a destination IP address of the received packet and checks whether there is an entry corresponding to a reception-packet IP address in the routing table held. Where there are a plurality of external-connection router devices connected to the external within the same local network and those external-connection router devices have settings to transfer packets to different external-connection router devices in the same local network that are more suited for the destination IP address, the received packets are transferred to the different external-connection router devices in the same local network. From then on, the packets are transferred from these different external-connection router devices to the external network. Furthermore, a redirect message is transmitted to the source terminal device of the received packet, in order to instruct the terminal device to transmit the subsequent packet to more suited external-connection router device. This optimizes the routing of transmission packets.

Meanwhile, there is an art that, by inserting a MARP layer between IP and network layers of the IP host, the IP host is allowed to select a default router out of a plurality of router devices thereby dispersing the burden on the router devices (see JP-A-2000-295291).

However, in the above prior art, even when the external-connection router device within the local network is connected to an external base station, the radio terminal device is desired to have communication with an external terminal device via the externally-connection router device. In the case that the next hop router IP address for areception-packet destination IP address in the routing table held by the external-connection router device is an IP address of another external-connection router device in the local network, transfer is performed to the relevant external-connection router device, i. e. the packet cannot be transferred to the external base station. Namely, there is a problem that the radio terminal device is not allowed to communicate with the external network via an intended external-connection router device.

### DISCLOSURE OF THE INVENTION

It is an object of the present invention to enable a transfer of a packet received by an external-connection router device connected to a base station in an external network, to the external base station without transfer to another external-connection router device even in case a next hop router IP address for a destination IP address of the received packet is an IP address of an external-connection router device in the same local network.

In order to solve the problem, the present invention is structured to transfer a packet preferentially to the external base station when the external-connection router device within the local network is connected to the external base station.

This makes it possible to transmit a packet to the external base station regardless of a routing table held by the external-connection router device in local networkwhich a radio terminal device is desirably to use in communication with the external terminal device, thus enabling communication with the external via an external-connection router device decided as a routing waypoint by the radio terminal device. Meanwhile, the reduced packet transfer frequency at between the external-connection router devices within the local network provides an effect of reducing the burden internal of the local network.

A router device in a first form of the invention comprises: a connection processing section for performing a connection process with a base station in an external network; a lower-layer information acquisition section for acquiring connection information with the base station, from the connection processing section; and a route judgment section for judging, when receiving a packet destined for a communication device in an external network from a radio terminal device in a same local network, the base station as a transfer destination in a case the connection information acquired from the lower-layer information acquisition section is indicative of a connection with the base station, and judging a transfer destination by looking up a routing table in a case the connection information is indicative of a non-connection with the base station. Due to this, where connected with a base station external of the local network, a packet can be transferred preferentially to the external base station, thus providing the operation that a packet can be transferred to the opposite of communication via an external-connection router device intended by the terminal device in the local network.

Meanwhile, a router device in a second form of the invention further includes a buffer for storing received data and a connection instructing section for instructing the connection processing section to have a connection with the base station. Then the lower-layer information acquisition section further acquires connection information of whether or not connectable with the base station of the external network. Therefore, when the route judgment section receives a packet destined for a communication device of the external network from a radio terminal device in the same local network, and when the connection information of from the lower-layer information acquisition section is indicative of not being connected with but being connectable with the base station, the received packet is held in the buffer, and the received data in the buffer is transferred to the base station after the connection instructing section instructs the connection processing section to have a connection with the base station and the connection processing section completes a connection with the base station. Due to this, where connectable with a base station external of the local network, a packet can be transferred preferentially to the external base station, thus providing the operation that a packet can be transferred to the opposite of communication via an external-connection router device intended by the terminal device in the local network.

Meanwhile, a router device in a third form of the invention comprises: a mobile IP processing section for registering a position to a home agent device set up on the Internet; and a route judgment section for judging, when receiving a packet destined for a communication device in an external network from a radio terminal device in a same local network, the home agent apparatus as a transfer destination in a case there is an entry for the home agent device within a binding update list of the mobile IP processing section, and judging a transfer destination by looking up a routing table in a case there is no entry for the home agent device within a binding update list. Due to this, where the registration of a position to the home agent is completed, a packet can be transferred preferentially to the home agent via the external base station, thus providing the operation that a packet can be transferred to the opposite of communication via an external-connection router device intended by the terminal device in the local network.

Meanwhile, in a router device in a fourth form of the invention, the route judgment section, in a case a next hop router is given as another router device in the same local network when looking up a routing table, inquires a radio terminal device, as a source of the received packet, whether to transfer the received packet to the next hop router.

Meanwhile, in a router device in a fifth form of the invention, the route judgment section transfers the received packet to the next hop router in a case of a response for permission from the radio terminal device and discards the received packet in a case of a response for non-permission. This allows the radio terminal device, or source of packet transfer, to refuse a transmission packet from passing through a different external-connection router device, thus providing the operation that it is not allowed to pass through an external-connection router device not intended.

Meanwhile, a communication method in a sixth form of the invention is a communication method on a local network having a plurality of radio terminal devices and a plurality of router devices for communication with a communication device existing on the Internet, the communication method characterized in that: the router device, when receiving a packet from a radio terminal device in a same local network during connection with a base station external of the local network, transfers the packet received to the external base station with which the router device itself is connected, regardless of a content of a routing table.

Meanwhile, a communication method in a seventh form of the invention is a communication method comprising: a step of transmitting a packet destined for a communication device in an external network, from a radio terminal device within a same local network to a router device; a step of detecting a connection state of between the router device and the base station of the external network when the router device received the packet; and a step of transferring the packet to the base station in a case of being connected with the base station, and transferring the packet according to a routing table in a case not connected to the base station. This makes it possible to transfer a packet to a base station external of the local network. Where connected to the base station external of the local network, a packet can be transferred preferentially to the external base station, thus providing the operation that a packet can be transferred to the opposite of communication via an external-connection router device intended by the terminal device in the local network.

Meanwhile, a communication method in an eighth form of the invention is a communication method comprising: a step of transmitting a packet destined for a communication device in an external network, from a radio terminal device within a same local network to a router device; a step of detecting a connection state of between the router device and the base station of the external network when the router device receives the packet; and a step of transferring the packet to the base station in a case of being connected with the base station and judging whether or not the router device is in a connectable state with the base station external of the local network in a case of not being connected to the base station, whereby connection processing is performed with the base station when connectable and the packet is transferred according to a routing table when not connectable. This makes it possible to transfer a packet to an external base station, thus providing the operation that a packet can be transferred to the opposite of communication via an external-connection router device intended by the terminal device in the local network.

Meanwhile, a communication method in a ninth form of the invention is a communication method on a local network having a plurality of radio terminal devices and a plurality of router devices for communication with a communication device existing on the Internet, the communication method characterized in that: the router device, when receiving a packet from a radio terminal device in a same local network in a case there is an entry for a home agent device in a binding update list, transfers the packet received to the communication device via the home agent device through use of reverse tunneling based on mobile IP, regardless of a content of a routing table.

Meanwhile, a communication method in a tenth form of the invention is a communication method comprising: a step that a router device registers a position to a home agent device existing on the Internet; a step of transmitting a packet destined for a communication device in an external network, from a radio terminal device in a same local network to the router device; and a step that, when the router device receives the packet, the packet is transferred to the communication device via the home agent device by use of reverse tunneling based on mobile IP in a case there is an entry for a home agent device within a binding update list of the router device, and transferred according to a routing table in a case there is no entry for the home agent device within the binding update list. Due to this, where the registration of a position to the home agent is completed, a packet can be transferred preferentially to the home agent via the external base station, thus providing the operation that a packet can be transferred to the opposite of communication via an external-connection router device intended by the terminal device in the local network.

As described above, according to the invention, when transmitting a packet from a terminal in a local network to a communication device in an external network, in the case an external-connection router device is connected to the external, communication is available via an external-connection router device selected by the terminal device in the local network. Meanwhile, traffic can be reduced within the local network.

### BRIEF DESCRIPTION OF THE DRAWINGS

Fig. 1 is a diagram showing a network configuration in embodiment 1 of the present invention.
Fig. 2 is a diagram showing a configuration of a radio terminal device in embodiment 1 of the invention.
Fig. 3 is a diagram showing a configuration of an external-connection router device in embodiment 1 of the invention.
Fig. 4 is a flowchart showing an operation of the external-connection router device in embodiment 1 of the invention.
Fig. 5 is a diagram showing a packet flow in the case the packet is transferred to an external-connection router device in a local network according to a routing table in embodiment 1 of the invention.
Fig. 6 is a diagram showing a packet flow in the case the route of a transmission packet from the radio terminal device is changed according to a redirect message in embodiment 1 of the invention.
Fig. 7 is a diagram showing a packet flow in the case of transferring a packet preferentially to a base station external of the local network in embodiment 1 of the invention.
Fig. 8 is a flowchart showing an operation of an external-connection router device in embodiment 2 of the invention.
Fig. 9 is a diagram showing a configuration of the external-connection router device in embodiment 2 of the invention.
Fig. 10 is a figure showing an example of a routing table in embodiment 1 of the invention.
Fig. 11 is a figure showing an example of a redirect message in embodiment 1 of the invention.
Fig. 12 is a diagram showing a configuration of a external-connection router device in embodiment 3 of the invention.
Fig. 13 is a flowchart showing an operation of an external-connection router device in embodiment 3 of the invention.
Fig. 14 is a diagram showing a network configuration in embodiment 3 of the invention.
Fig. 15 is a diagram showing a packet flow in embodiment 3 of the invention.

### BEST MODE FOR CARRYING OUT THE INVENTION

Embodiments of the present invention will now be explained with use of the drawings.

### (Embodiment 1)

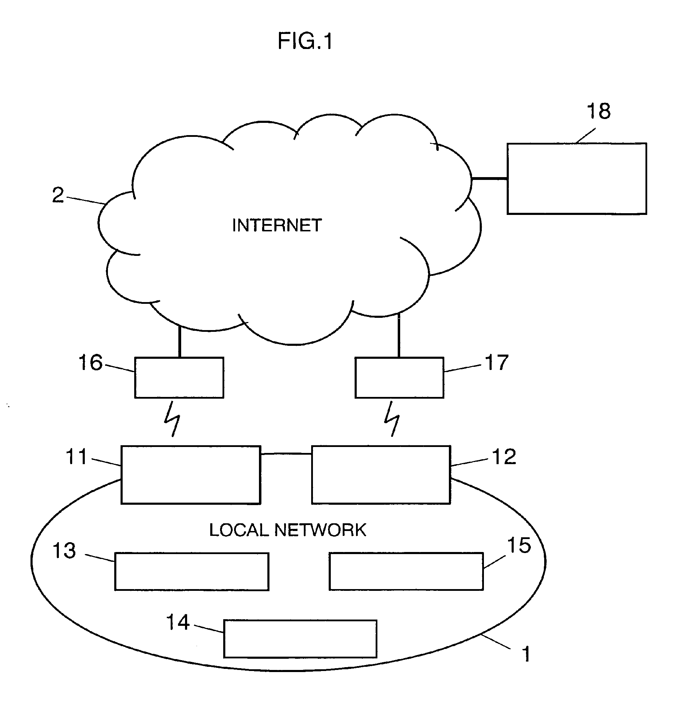

Fig. 1 is a configuration diagram of a radio communication system in embodiment 1 of the present invention. In Fig. 1, the radio communication system includes a local network 1 constituted by a plurality of radio terminal devices 13, 14, 15 and external-connection router devices 11, 12, the Internet 2, base stations 16, 17, and external terminal device 18. The external-connection router device 11, 12 has at least one radio interface to have communication with a base station external of the local network. The radio terminal device 13, 14, 15 has at least one radio interface. The base station 16, 17 has at least one radio interface, thus being connected to the Internet. The external terminal device 18 is a communication device connected to the Internet.

The radio terminal device 13 is now explained. The other radio terminal devices 14, 15 are similar in configuration and operation to the same.

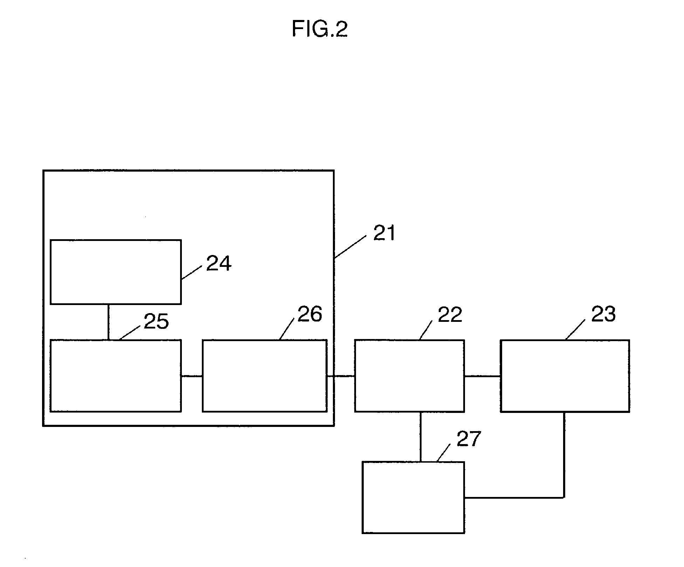

Fig. 2 is a configuration diagram of the radio terminal device 13. In Fig. 2, a local-network-side lower-layer processing section 21 includes an interface section 24, a modulator/demodulator section 25 and an access control section 26. Meanwhile, an IP processing section 22 is to perform an IP processing, an higher-layer processing section 23 is to perform a higher-layer processing such as of application layer and transport layer, and a route selector section 27 is to select a route of a transmission packet.

First explained is the operation during data transmission of the radio terminal device 13 configured as above.

In the radio terminal device 13, when the higher-layer processing section 23 causes data to be transmitted according to the application in use, transmission data is delivered to the IP processing section 22 after subjected to the processing in the transport layer, such as header addition based on TCP (transmission control protocol) or UDP (user datagram protocol). Meanwhile, in the higher layer, selected is an external-connection router device for connection to an access network suited for the application used. The external-connection router device selected is set to have an address in the next hop to an entry in routing table for an address of an external terminal device for communication by use of the application, or an address in a default router.

Incidentally, another method may be used without being limited to the above provided that it is a method to transmit a packet to the external-connection router device selected by the radio terminal device 13.

Then, the IP processing section 22 is to perform the usual IP processing (IP header addition, etc. ) , to output an IP packet to a local-network-side lower-layer processing section 21. On this occasion, when the IP packet has a destination address prefix different from a local network to which the radio terminal device 13 belongs, the routing table is looked up. In the case there is an entry for the destination address, the IP packet is to be transmitted to the IP address established in the next hop. Meanwhile, when there is no entry, the IP packet is transmitted to a default router set previously. By an ARP process in IPv4 or a neighbor discovery process in IPv6, acquired is an address in the lower layer of next hop or default router. To this address, transmitted is an IP packet added with a lower-layer header.

Inthelocal-network-sidelower-layerprocessingsection 21, the access control section 26 is to perform an access control for enabling communication at a plurality of radio terminal devices while the modulator/demodulator section 25 is to carry out a modulation processing. Thereafter, an electric signal is released at the interface section 24 into a free space or onto a cable.

Next explained is the operation of the radio terminal device 13 when receiving data.

The radio terminal device 13 extracts, at an interface section 24, an electric signal in the free space or the cable and outputs it to the modulator/demodulator section 25. The modulator/demodulator section 25 demodulates the received electric signal and converts it into a bit string to be outputted to an access control section 26. The access control section 26 deletes a header, etc. for access control and outputs an IP packet to the IP processing section 22.

The IP processing section 22 makes a processing of IP header. When the received IP packet is destined for the own apparatus, data is delivered to the higher-layer processing section 23. When not destined for the own apparatus, the received IP packet is discarded. The higher-layer processing section 23 makes a higher-layer processing, such as a processing of TCP or UDP header deletion, in the transport layer and a received data processing in the application.

The external-connection router device 11, 12 is now explained.

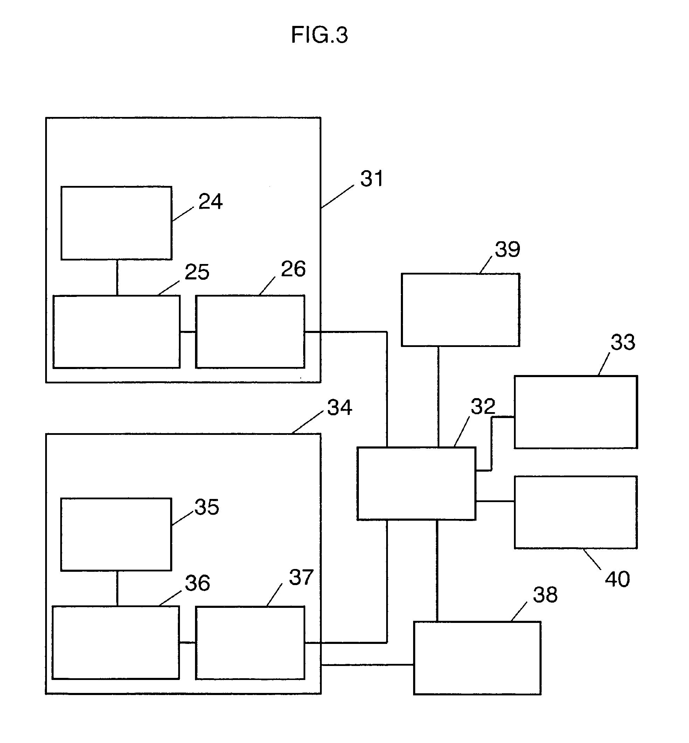

Fig. 3 shows a configuration diagram of the external-connection router device 11, 12. In Fig. 3, a local-network-side lower-layer processing section 31 has a function similar to that of the local-network-side lower-layer processing section 21, and includes an interface section 24, amodulator/demodulator section 25 and an access control section 26. Meanwhile, an IP processing section 32 is to perform an IP processing, a route judgment section 40 is to judge, in the IP layer, a destination of transfer of a received packet, and a higher-layer processing section 33 is to perform a processing in the higher layer, such as application layer and transport layer. An access-network-side lower-layer processing section 34 includes an interface section 35, modulator/demodulator section 36 and access control section 37, for communication with the base station 16 or the base station 17. The access-network-side lower-layer processing section 34 has a function as a connection processing section to perform a connection processing with the base station. A lower-layer information acquisition section 38 is to acquire connection information, such as of whether or not there is a connection, from the lower layer to the external. A buffer 39 is to temporarily store a transmission packet when not connected with the external base station. A route judgment section 40 is to judge a transfer route for a received packet, depending upon a connection status with the base station. Interface sections 24, 35 represent antennas for wireless cases or connectors, etc. for wired cases.

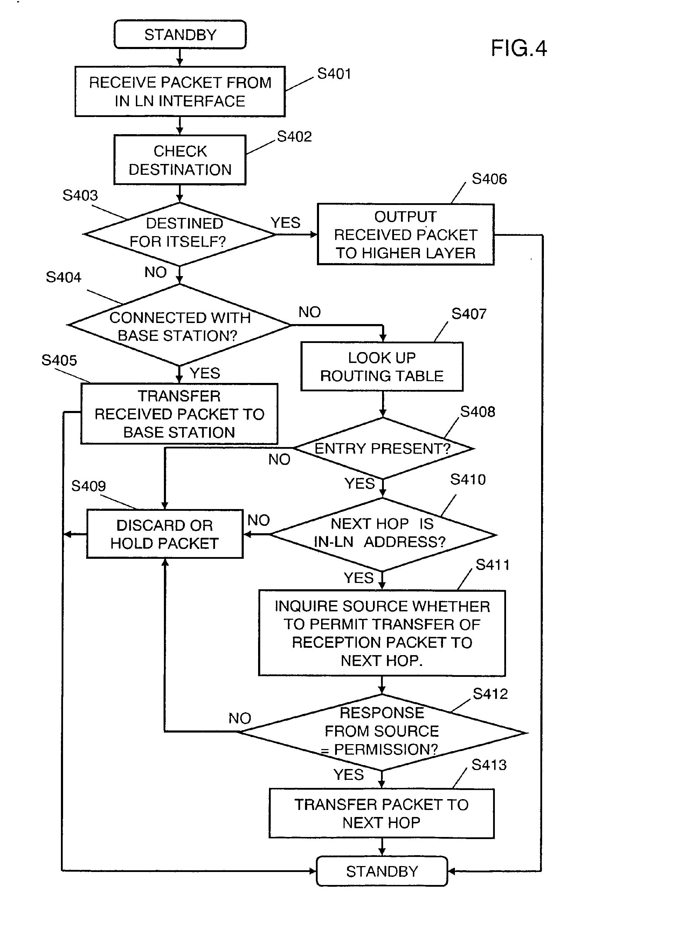

The operation of the external-connection router device 11, 12 configured as above is explained by use of a process flowchart in Fig. 4. Note that the local-network-side lower layer processing section 31b and higher-layer processing section 33 is similar in operation to the radio terminal device 13.

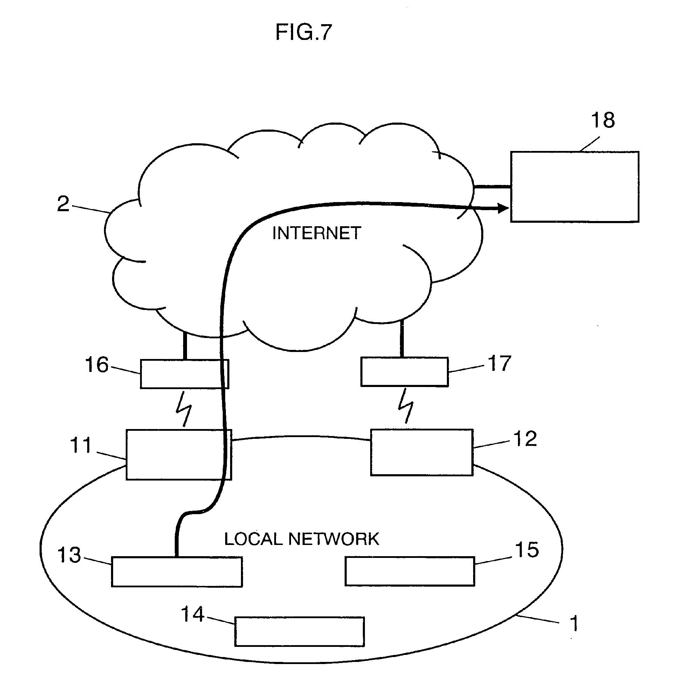

At first, when the local-network-side lower processing section 31 of the external-connection router device 11 receives a packet from the radio communication terminal device 13 in the same local network (step S401), the IP processing section 32 refers to a destination IP address of a received packet (step S402) and checks whether or not it is destined for the own device (step S403). When destined for the own device, the IP processing section 32 delivers a data portion of the received packet to the higher-layer processing section 33 (step S406). When not destined for the own device, the route judgment section 40 is instructed to judge a transfer destination. The route judgment section 40 checks the lower-layer information acquisition section 38 as to whether the own device is connected with the external base station 16 (step S404). When receiving a response on a fact of connection to the base station 16 from the lower-layer information acquisition section 38, the route judgment section 40 respond to the IP processing section 32 that transfer destination is for the base station 16. Receiving it, the IP processing section 32 transfers areceivedpacket to the external base station 16 (step S405). The packet route in this case is given as in Fig. 7.

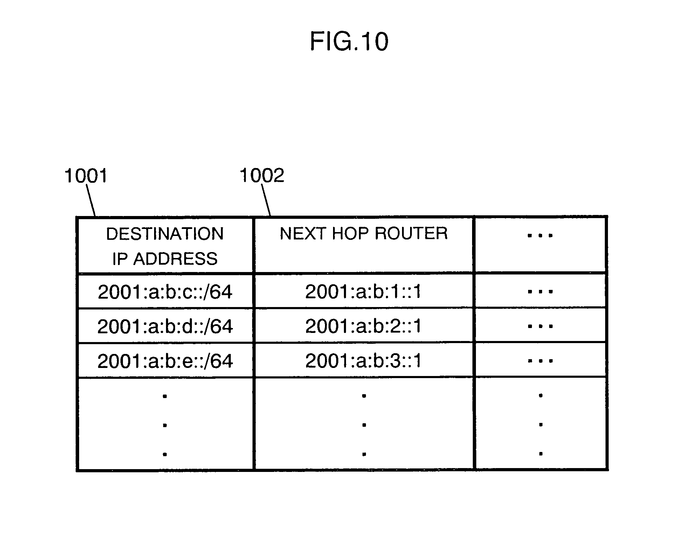

Meanwhile, when not connected with the base station 16, the route judgment section 40 looks up the routing table held therein (step S407) and checks whether there is an entry for a destination IP address (step S408). Fig. 10 shows a structure of the routing table.

In Fig. 10, the routing table includes at least a destination IP address (prefix) 1001 and a next-hop-router IP address 1002. The router device in general, when received a packet, looks up the routing table, to make a transfer to the corresponding next-hop-router 1002 in the case there is an agreement between the destination IP address 1001 of routing table and the destination IP address or prefix of received packet.

In the absence of an entry, the route judgment section 40 responds to the IP processing section 32 that there is no registration of transfer destination. Receiving it, the IP processing section 32 discards the packet or temporarily stores it in the buffer 39 (step S409). Meanwhile, in the presence of an entry, the route judgment section 40 checks whether the next-hop-router IP address agrees with the IP address of an external-connection router device 12 in the same local network (step S410). When the next-hop-router IP address does not agree with the IP address of the external-connection router device 12 in the same local network, the route judgment section 40 notifies the IP processing section 32 of the absence of a transfer destination. The IP processing section 32 discards the packet or temporarily stores it in the buffer 39 (step S409).

At this time, the route judgment section 40, when established a connection with the external base station 16, is notified from the lower-layer information acquisition section 38 and instructs the IP processing section 32 to transfer the packet held in the buffer 39 to the external base station 16. This allows the IP processing section 32 to transfer the held packet to the base station 16.

Then, the route judgment section 40, when the next-hop-router IP address agrees with the IP address of the external-connection router device 12 in the same local network, inquires the radio terminal device 13 as a received-packer transmission source whether the received packet may be transferred to the external-connection router device 12 (step S411).

The radio terminal device 13 sends, to the external-connection router device 12, a response indicative of permitting or not permitting a transfer in response to the inquiry of from the external-connection router device 11. Incidentally, the decision to permit or not to permit a transfer can be previously set in the route selector section 27 of the radio terminal device 13 or can be decided and set by the user when receiving an inquiry from the external-connection router device. For example, it can be considered that, in case the application for use requires security, the user is to refuse a packet from transferring through an access network where security secured is insufficient. Otherwise, it can be considered that, the radio terminal device , when there is another external-connection router device having the similar feature to the first-selected external-connection router device, permit a transfer to that external-connection router device.

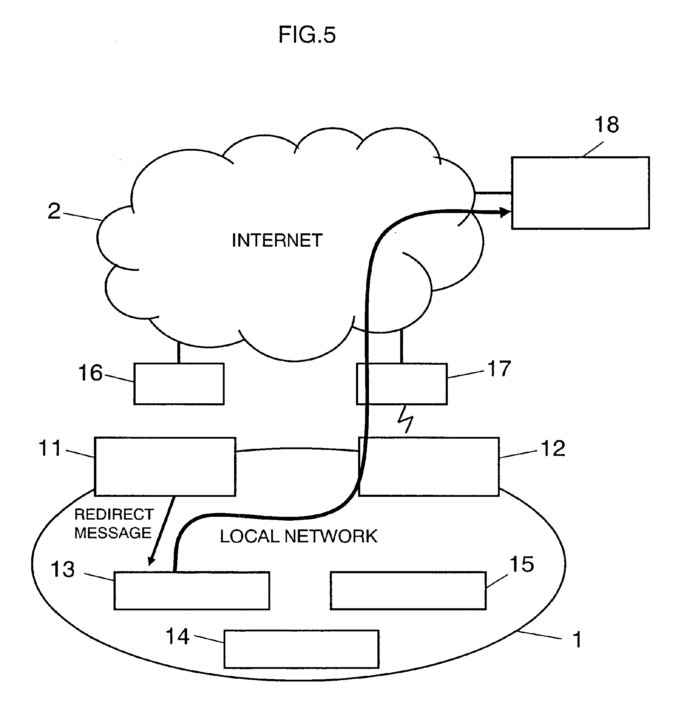

Then, the external-connection router device 11 receives the response from the radio terminal unit 13 and the route judgment section 40 checks whether to permit or not to permit a transfer (step S412). When the response is indicative of permitting a transfer, the route judgment section 40 notifies the IP processing section 32 that transfer destination is for the external-connection router device 12, and the IP processing section 32 makes a transfer to the external-connection router device 12 (step S413). The packet route in this case is given as in Fig. 5, i. e. the packet transmitted from the radio terminal device 13 is transferred from the external-connection router device 11 to the external-connection router device 12, thus reaching the external-connection router device 18 via the external base station 17.

Meanwhile, the route judgment section 40, when the response from the radio terminal device 13 is indicative of not permitting a transfer, notifies it to the IP processing section 32. Thus, the IP processing section 32 discards a received packet or temporarily stores it in the buffer 39.

As described above, according to the present embodiment, the external-connection router device, when received a packet destined for an external-connection terminal device of external network from a radio terminal device in the local network, transfers the packet preferentially to the external in case of being connected to the external network. Accordingly, the radio terminal device, when a selected external-connection router device is connected to an external network, is allowed to have communication at all times via the relevant external-connection router device. In this case, because the packet is not transferred to another external-connection router device in the local network, the burden internal of the local network can be reduced.

Incidentally, at step S413, the IP processing section 32 of the external-connection router device 11 may decide whether to transmit a redirect message 1100 to the radio terminal device 13. The redirect message is to instruct the source radio terminal device 13 to transmit a packet destined for a different external-connection router device.

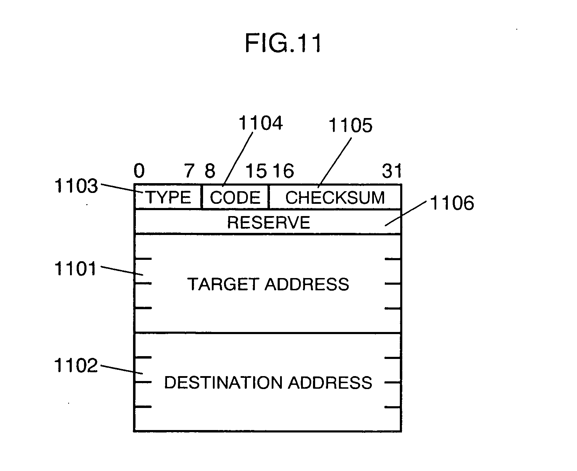

Fig. 11 shows a format example of a redirect message 1100. This is structured by type field 1103, code field 1104, checksum field 1105, reserve field 1106, target address field 1101 and destination address field 1102. In this case, the target address fields 1101 is set with an IP address of the external-connection router device 12 while destination address field 1102 is set with an IP address of the external-connection router device 8.

The redirect message 1100, in a certain case, is not used form the viewpoint of security. In the case of transmitting a redirect message 1100, the external-connection router device 11 transmits aredirect message 1100 and then returns to a standby state.

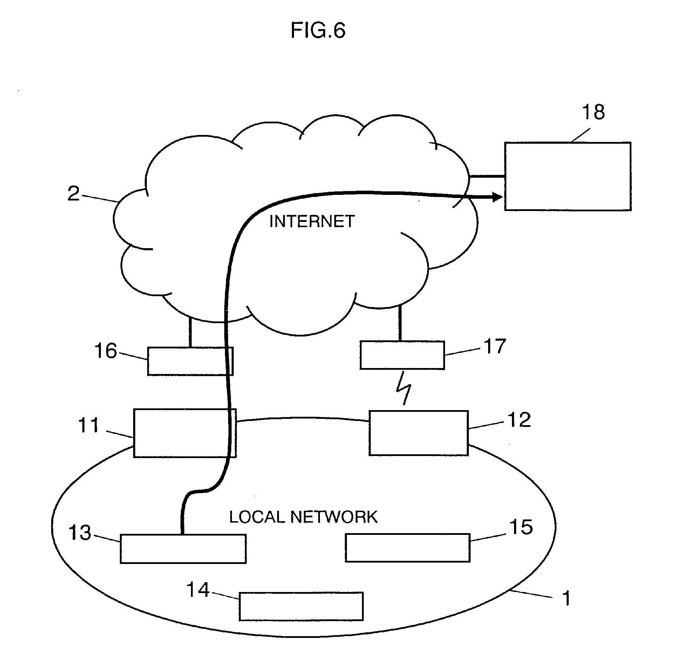

The radio terminal device 13, after received the redirect message from the external-connection router device 11, sets the IP address described in the source address field 1102 and IP address described in the target address field 1101 in a destination IP address field 1001 and next hop router field 1002 of a routing table shown in Fig. 10. From then on, the packet, to be transmitted from the radio terminal device 13 to the external-connection terminal device 18, is sent to the external-connection terminal device 12. This connects the radio terminal device 13 to the external-connection terminal device 18 via the external-connection terminal device 12 and base station 17, as shown in Fig. 6. Thus, transmission packet route is changed.

Note that similar effect is obtainable in case the steps S403 and S404 are replaced in order in the present embodiment.

### (Embodiment 2)

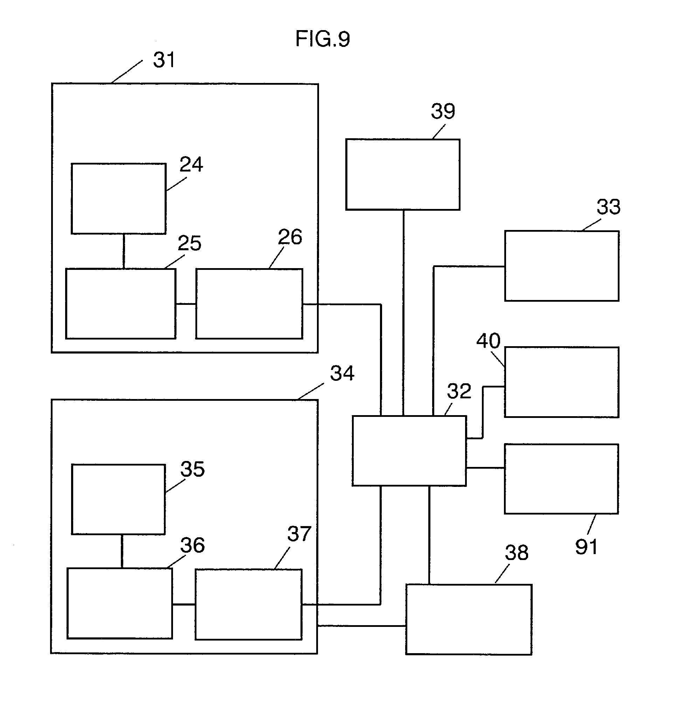

Fig. 9 is a diagram showing a configuration of an external-connection router device in embodiment 2 of the invention. In Fig. 9, the difference from embodiment 1 lies in the provision of a connection instructing section 91.

The connection instructing section 91 is to instruct a connection to a base station depending upon the information of whether or not connection is possible with the external base station 16.

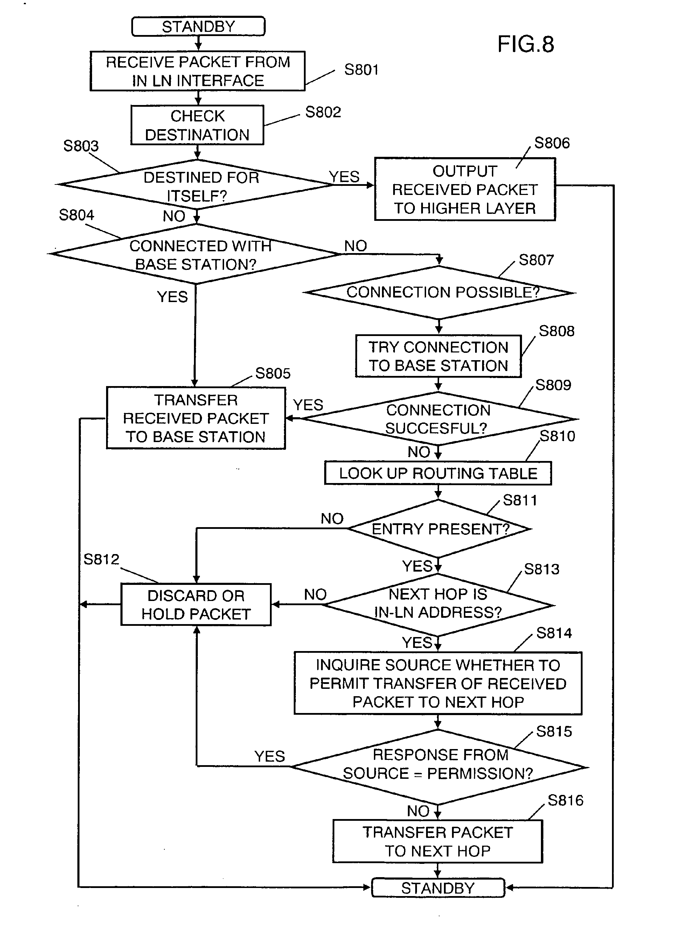

The operation of the external-connection router device in this embodiment is now explained by using a flowchart of Fig. 8.

In Fig. 8, the external-connection router device in this embodiment is different from the external-connection router device in embodiment 1 in that connection is tried with the base station when not connected to the base station. Namely, the operation at steps S801 to S806 is similar to that at steps S401 to S406 of embodiment 1.

When not connected with the external base station 16, the connection instructing section 91 checks the access-network-side lower-layer processing section 34 whether it is in a connectable status according to the information of signal reception power intensity, etc. from the base station (step S807). The connection instructing section 91, when receives a response that it is connectable to the external base station 16 from the access-network-side lower-layer processing section 34, instructs for connection. The access-network-side lower-layer processing section 34 performs a connection processing (step S808). The IP processing section, during a connection process with the external base station 16, holds the received packet in the buffer 39.

Then, the route judgment section 40 judges whether or not there is connection with the external base station 16 (step S809). When it receives a notification of a connection with the external base station 16 from the access-network-side lower-layer processing section 34, the IP processing section 32 is instructed that transfer destination is for the base station 16. The IP processing section 32 receives the instruction and transfers a received packet to the base station 16 (step S805). In the case of a failed connection, looked up is a routing table held in the own device (step S810) to check whether there is an entry for a destination IP address (step S811). The subsequent process at steps S810 to S816 is similar to the process at the steps S408 to S413 of embodiment 1.

As described above, according to the present embodiment, the external-connection router device, when received a packet destined for an external terminal device of external network from a radio terminal device in the local network, makes a connection when connectable even in a state not being connected to an external network, thus preferentially transferring a packet to the external. Due to this, the radio terminal device, when a selected external-connection router device is connectable with the external network, is allowed to have communication at all times via the relevant external-connection router device. In this case, because the packet is not transferred to another external-connection router device within the local network, the internal burden on the local network can be reduced.

Note that similar effect is obtainable in case the steps S803 and S804 are replaced in order in the present embodiment.

### (Embodiment 3)

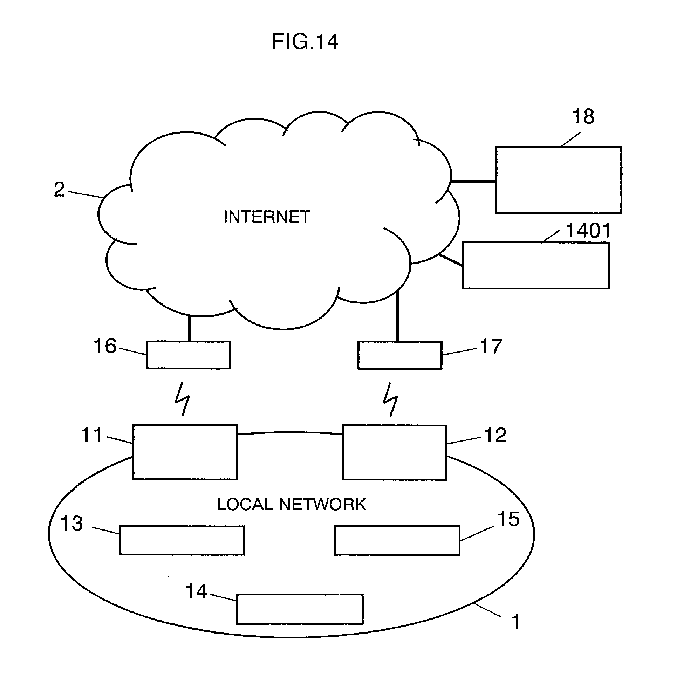

Fig. 14 is an configuration diagram of a radio communication system in the present embodiment. In Fig. 14, the difference from embodiment 1 lies in that a home agent device 1401 is provided.

To this home agent device 1401 is to be transmitted a packet (binding update) for registering a pair of movement destination address and home address by the external-connection router device 11, 12 when there is a movement of a local network to which the external-connection router device 11, 12 belongs. The home agent device 1401, in case a pair of home address and movement destination address of the external-connection router device 11, 12 is registered in a cache (binding cache), transfers all the packets thereafter transmitted destined for the home address to the external-connection router device 11, 12 through utilization of an IPv6 tunnel.

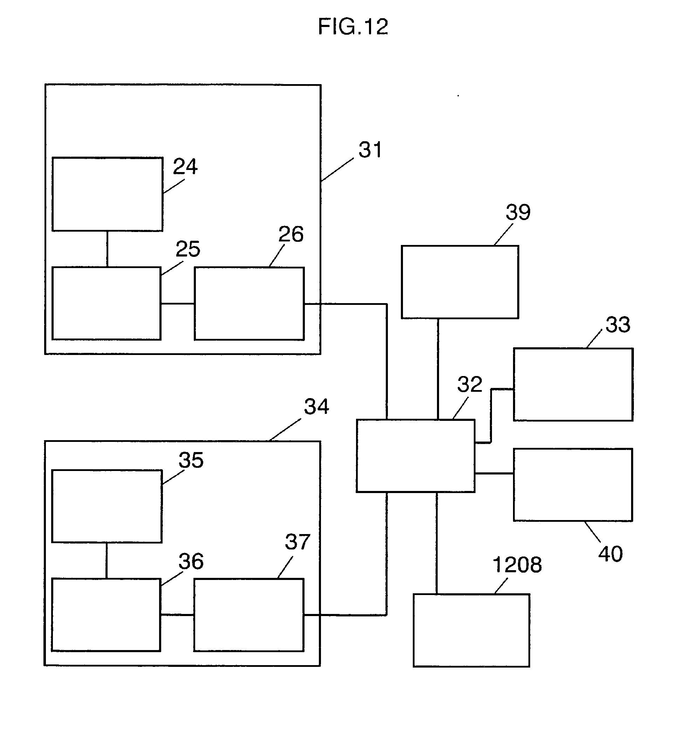

The configuration of the external-connection router device in this embodiment is now shown in Fig. 12. In Fig. 12, the difference from the external-connection router device of the embodiment 1 lies in that there is added a mobile IP processing section 1208 for implementing the ordinary mobile IP processing such as a position registration process to the home agent device 1401 and the buffer 39 to temporarily store a transmission packet before completing the position registration processing based on mobile IP.

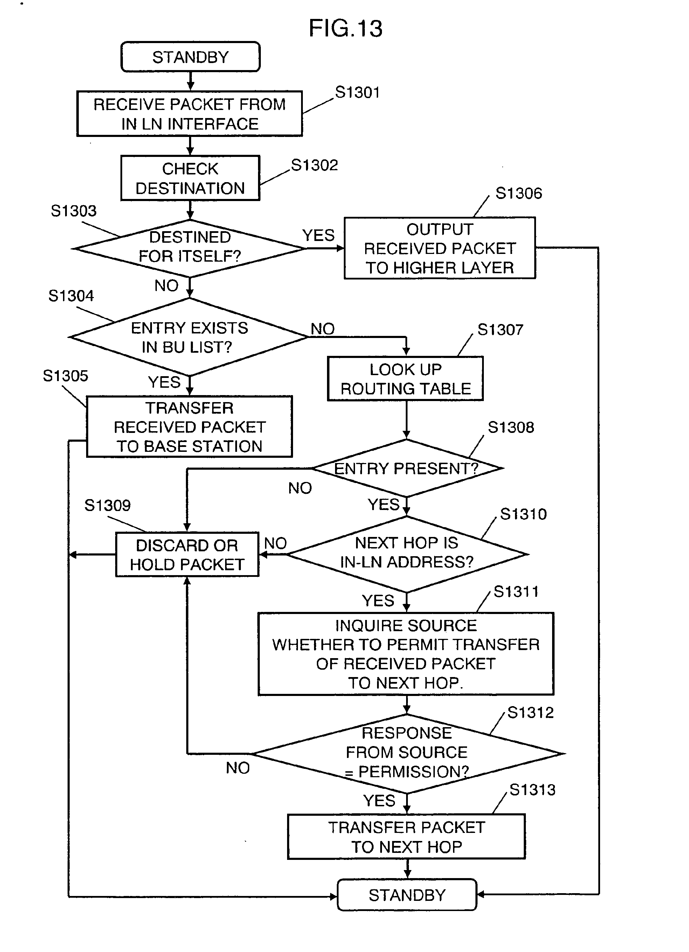

The operation of the external-connection router device 11, 12 configured as above is explained by using an operation flowchart of Fig. 13.

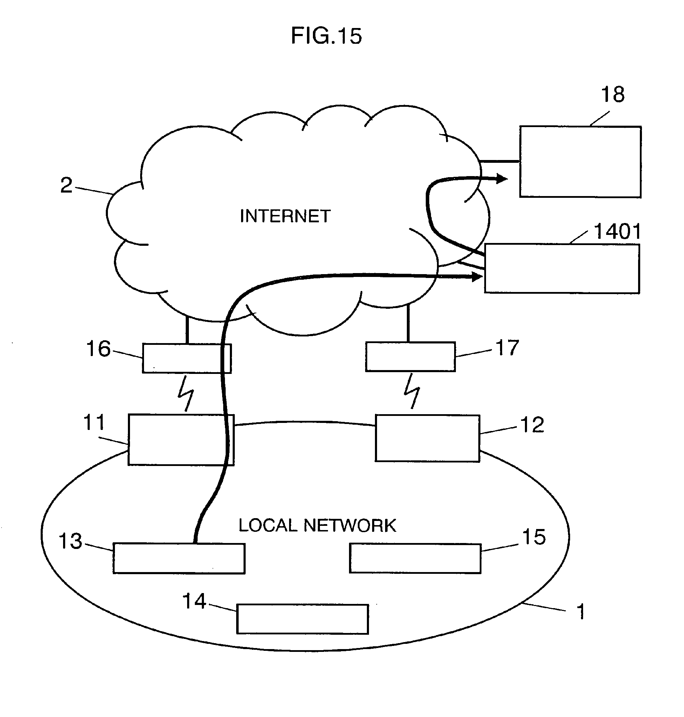

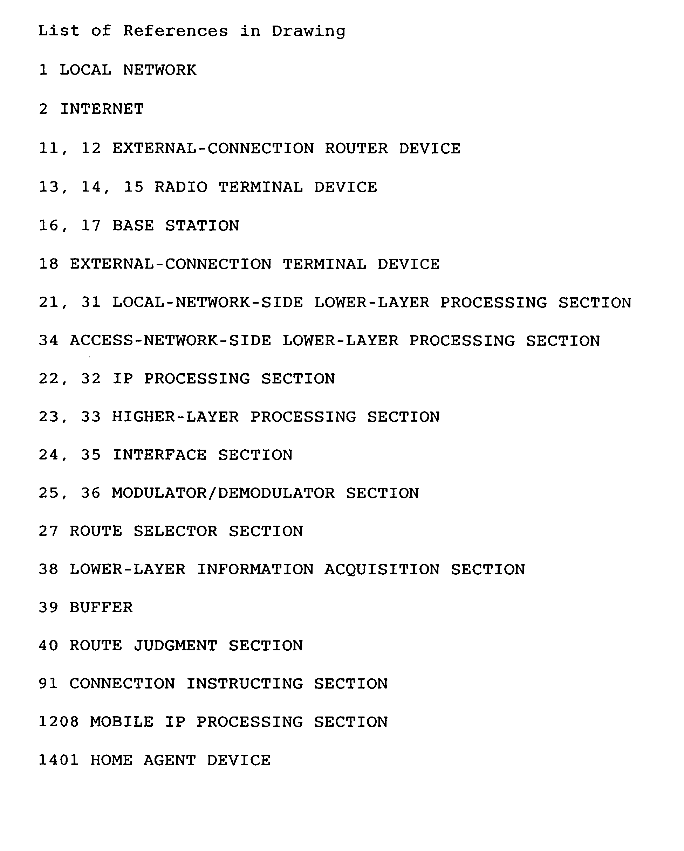

The IP processing section 32 of the external-connection router device 11, when received a packet from the radio terminal 13 in the same local network 1 through the lower-layer processing section 31 (step S1301), refers to a destination IP address of a received packet (step S1302) and checks whether or not it is destined for the own device (step S1303). When destined for the own device, the data portion of the received packet is delivered to the higher-layer processing section 33 (step S1306). When not destined for the own device, notification is made to the mobile IP processing section 1208. The mobile IP processing section 1208 refers to an internal binding update list (BU list) (step S1304). In the case there is an entry for the home agent device 1401 within the binding update list, the information is notified to the IP processing section 32. Receiving this, the IP processing section 32 transfers areceived packet to the home agent device 1401 by use of reverse tunneling based on mobile IP. Namely, the received packet is encapsulated and the received packet is transferred to the external base station 16 (step S1305). The packet route, in this case, as shown in Fig. 15, is for transmission from the base station 16 to the external terminal device 18 via the home agent device 1401.

Meanwhile, in the case the IP processing section 32 is notified of the absence of an entry for home agent device within the binding update list from the mobile IP processing section 1208, it looks up a routing table held by itself (step S1307) and checks whether there is an entry for a destination IP address (step S1308). The subsequent process of up to step S1313 is similar to the process at the steps S408 to S413 of embodiment 1.

As described above, according to the present embodiment, when receiving a packet destined for an external-connection terminal device in an external network from a radio terminal device in a local network, the external-connection router device preferentially transfers the packet to the external in the case there is an entry for a home agent device in the binding update list. Due to this, when the selected external-connection router device is connected to an external network, the radio terminal device is allowed to transmit a packet destined for an external terminal device at all times via the relevant external-connection router device. In this case, because the packet is not transferred to another external-connection router device in the local network, it is possible to reduce the burden internal of the local network.

Note that similar effect is obtainable in case the steps S1303 and S1304 are replaced in order in the present embodiment.

### INDUSTRIAL APPLICABILITY

As described above, the present invention is useful for a router device, etc. in a local network constituted by a plurality of radio terminal devices and a plurality of router devices for communication with a communication device existing on the Internet, and suited for the radio terminal device to have communication with an external communication device via a particular external-connection router device.

## Claims

1. A router device comprising:
a connection processing section for performing a connection process with a base station in an external network;
a lower-layer information acquisition section for acquiring connection information with the base station, from the connection processing section; and
a route judgment section for judging, when receiving a packet destined for a communication device in an external network from a radio terminal device in a same local network, the base station as a transfer destination in a case the connection information acquired from the lower-layer information acquisition section is indicative of a connection with the base station, and judging a transfer destination by looking up a routing table in a case the connection information is indicative of a non-connection with the base station.

2. A router device according to claim 1, further including a buffer for storing received data and
a connection instructing section for instructing the connection processing section to have a connection with the base station,
wherein the lower-layer information acquisition section further acquires connection information of whether or not it is connectable with the base station of the external network, and
when the route judgment section receives a packet destined for a communication device of the external network from a radio terminal device in the same local network, in a case the connection information of from the lower-layer information acquisition section is indicative of being not connected with but connectable with the base station, the received packet is held in the buffer, and the received data in the buffer is transferred to the base station after the connection instructing section instructed the connection processing section to have a connection with the base station and the connection processing section completes a connection with the base station.

3. A router device comprising:
a mobile IP processing section for registering a position to a home agent device set up on the Internet; and
a route judgment section for judging, when receiving a packet destined for a communication device in an external network from a radio terminal device in a same local network, the home agent apparatus as a transfer destination in a case there is an entry for the home agent device within a binding update list of the mobile IP processing section, and judging a transfer destination by looking up a routing table in a case there is no entry for the home agent device within a binding update list.

4. A router device according to any one of claims 1 to 3, wherein the route judgment section, in a case a next hop router is given as another router device in the same local network when looking up a routing table, inquires a radio terminal device, as a source of the received packet, whether to transfer the received packet to the next hop router.

5. A router device according to claim 4, wherein the route judgment section transfers the received packet to the next hop router in a case of a response for permission from the radio terminal device and discards the received packet in a case of a response for non-permission.

6. A communication method on a local network having a plurality of radio terminal devices and a plurality of router devices for communication with a communication device existing on the Internet, the communication method **characterized in that**:
the router device, when receiving a packet from a radio terminal device in a same local network during connection with a base station external of the local network, transfers the packet received to the external base station with which the router device itself is connected, regardless of a content of a routing table.

7. A communication method comprising:
a step of transmitting a packet destined for a communication device in an external network, from a radio terminal device within a same local network to a router device;
a step of detecting a connection state of between the router device and the base station of the external network when the router device received the packet; and
a step of transferring the packet to the base station in a case connected with the base station, and transferring the packet according to a routing table in a case not connected to the base station.

8. A communication method comprising:
a step of transmitting a packet destined for a communication device in an external network, from a radio terminal device within a same local network to a router device;
a step of detecting a connection state of between the router device and the base station of the external network when the router device received the packet; and
a step of transferring the packet to the base station in a case of being connected with the base station and judging whether or not the router device is in a connectable state with the base station external of the local network in a case of not being connected to the base station, whereby connection processing is performed with the base station when connectable and the packet is transferred according to a routing table when not connectable.

9. A communication method on a local network having a plurality of radio terminal devices and a plurality of router devices for communication with a communication device existing on the Internet, the communication method **characterized in that**:
the router device, when receiving a packet from a radio terminal device in a same local network in a case there is an entry for a home agent device in a binding update list, transferring the packet received to the communication device via the home agent device through use of reverse tunneling based on mobile IP, regardless of a content of a routing table.

10. A communication method comprising:
a step that a router device registers a position to a home agent device existing on the Internet;
a step of transmitting a packet destined for a communication device in an external network, from a radio terminal device in a same local network to the router device; and
a step that, when the router device received the packet, the packet is transferred to the communication device via a home agent device by use of reverse tunneling based on mobile IP in a case there is an entry for a home agent device within a binding update list of the router device, and transferred according to a routing table in a case there is no entry for the home agent device within the binding update list.
